# DEMANDE DE BREVET EUROPEEN

(11) **EP 1 426 235 A1**
(43) Date de publication de la demande: **09.06.2004**
(21) Numéro de dépôt: 03293017.4
(22) Date de dépôt: 02.12.2003
(51) Int. Cl.: B60P 3/42

(54) **Véhicule automobile transformable en véhicule à benne ouverte vers le haut**

(30) Priorité: 03.12.2002 FR 0215228
(71) Demandeur: Peugeot Citroen Automobiles SA, 78140 Vélizy Villacoublay (FR)
(72) Inventeur: Belanger, Pascal, 92310 Sevres (FR)
(74) Mandataire: Lanceplaine, Jean-Claude

(57) **Abrégé**

L'invention concerne un véhicule automobile (1) transformable en véhicule automobile à benne ouverte vers le haut, du type comportant un habitacle (2) et un coffre (3) délimité par une cloison de séparation (10) avec l'habitacle (2) et par un ensemble (11) formé par un couvercle et une paroi d'extrémité arrière (13). L'ensemble est supporté par un cadre (20) déplaçable au moyen d'un système d'articulations vers l'arrière du véhicule entre une position haute dans laquelle le couvercle (12) et la paroi d'extrémité (13) ferment le coffre (3) et une position basse dans laquelle ledit couvercle (12) est appliqué contre le plancher (6) pour transformer ce véhicule en véhicule à benne ouverte vers le haut.

## Description

La présente invention concerne un véhicule automobile transformable en véhicule automobile à benne ouverte vers le haut.

Les véhicules automobiles de type berline ou coupé comportent, de manière classique, un habitacle contenant au moins une rangée de sièges et un coffre délimité par un couvercle déplaçable entre une position de fermeture et une position d'ouverture et par une paroi arrière fixe. L'habitacle est séparé du coffre par une cloison.

Dans les véhicules automobiles de type berline, l'habitacle contient également une rangée de sièges arrière escamotables et la cloison de séparation est basculable entre une position sensiblement verticale de séparation de l'habitacle du coffre et une position sensiblement horizontale mettant en communication l'habitacle et le coffre afin d'augmenter longitudinalement le volume de chargement de ce coffre.

Mais, avec ce genre de véhicules, la capacité de chargement du coffre est limitée en hauteur par le couvercle.

On connaît également des véhicules automobiles à benne ouverte vers le haut appelés pick-up et qui comportent à l'arrière d'une cabine constituée par la partie antérieure du véhicule, renfermant le poste de conduite, la benne ouverte vers le haut de forme générale parallélépipédique.

La benne ouverte de ce type de véhicule comporte un plancher, deux parois latérales dans la direction longitudinale du véhicule et une paroi d'extrémité arrière ouvrante située à l'opposé de la cabine. De tels véhicules présentent des avantages en ce qui concerne leur capacité de chargement par rapport à un véhicule de type berline ou même par rapport à un véhicule de type monocorps ou break, puisque le niveau de chargement de la benne est pratiquement illimité du fait de l'absence d'un toit recouvrant ladite benne.

Par contre, les véhicules de ce type ne permettent pas de modifier le rapport entre le volume de chargement et celui alloué aux passagers, principalement à cause de la paroi fixe séparant l'habitacle de la benne et ne peuvent être utilisés qu'à des fins utilitaires et seulement par le conducteur et éventuellement un passager, ce qui limite leur intérêt dans le cas de leur utilisation par des particuliers.

L'invention à pour but de proposer un véhicule automobile transformable qui permet de bénéficier des avantages d'un véhicule automobile de type berline ou coupé et également des avantages d'un véhicule automobile de type à benne ouverte vers le haut, sans en avoir les inconvénients.

L'invention a donc pour objet un véhicule automobile transformable en véhicule automobile à benne ouverte vers le haut, appelé pick-up, du type comportant, d'une part, un habitacle délimité par deux parois latérales, un pavillon et un plancher et contenant au moins une rangée de sièges avant et, d'autre part, un coffre délimité par une cloison de séparation entre l'habitacle et le coffre et par un ensemble formé par un couvercle et une paroi d'extrémité arrière solidaire dudit couvercle, caractérisé en ce que l'ensemble formé par le couvercle et la paroi d'extrémité est supporté par un cadre déplaçable au moyen d'un système d'articulations vers l'arrière du véhicule entre une position haute dans laquelle le couvercle et la paroi d'extrémité forment le coffre et une position basse dans laquelle ledit couvercle est appliqué contre le plancher pour transformer ce véhicule en véhicule à benne ouverte vers le haut.

Selon d'autres caractéristiques de l'invention :
- le système d'articulation est formé par deux paires de biellettes parallèles et disposées chacune entre un montant longitudinal du cadre et le plancher,
- chaque biellette comporte une première extrémité montée articulée sur le montant longitudinal correspondant et une seconde extrémité montée articulée sur le plancher,
- l'ensemble formé par le couvercle et la paroi d'extrémité est monté articulé sur le cadre et est déplaçable dans la position haute dudit cadre, entre une position de fermeture du coffre et une position d'ouverture dudit coffre,
- la cloison de séparation est montée articulée sur le plancher et est basculable vers l'arrière de véhicule entre une position sensiblement verticale de la séparation de l'habitacle et du coffre et une position sensiblement horizontale appliquée contre ledit plancher dans la configuration à benne ouverte vers le haut,
- le couvercle comporte, sur son bord transversal avant, un volet pivotant entre une première position appliquée sur le couvercle dans la position haute du cadre et une seconde position en prolongement dudit couvercle et appliquée contre le plancher dans la position basse dudit cadre,
- le couvercle comporte, sur son bord transversal arrière, un volet pivotant entre une position horizontale appliquée contre le couvercle et une position sensiblement verticale,
- la paroi d'extrémité est formée par un premier bandeau solidaire du couvercle et par un second bandeau monté articulé sur ce premier bandeau et déplaçable entre une position active prolongeant ledit premier bandeau dans la position haute du cadre et une position escamotée contre le premier bandeau dans la position basse dudit cadre.

D'autres caractéristiques et avantages de l'invention apparaîtront au cours de la description qui va suivre, donnée à tire d'exemple et faite en référence aux dessins annexés, sur lesquels :
- la Fig. 1 est une vue schématique en coupe longitudinale d'un véhicule automobile selon l'invention,
- la Fig. 2 est une vue schématique en perspective des différents éléments composant la partie arrière du véhicule automobile selon l'invention,
- les Figs. 3 à 6 sont des vues schématiques en coupe longitudinale de la partie arrière dans les différentes possibilités de transformation du véhicule automobile selon l'invention,
- la Fig. 7 est une vue schématique en perspective d'une variante des différents éléments composant la partie arrière du véhicule automobile selon l'invention,
- les Figs. 8 et 9 sont des vues schématiques en coupe longitudinale de la partie arrière dans les différentes possibilités de transformation selon le second mode de réalisation.

Le véhicule automobile représenté sur les figures et désigné dans son ensemble par la référence 1, comporte, de manière classique, une carrosserie formant, entre autres, un habitacle 2 et un coffre 3.

Dans l'exemple de réalisation représenté sur les figures, le véhicule automobile 1 est un véhicule de type coupé, muni de deux portes. Le véhicule automobile selon l'invention peut également être un véhicule automobile de type berline.

De manière classique, l'habitacle 2 est délimité par deux parois latérales 4, un pavillon 5 et un plancher 6 et contient une rangée de sièges avant 7 et une rangée de sièges arrière 8 qui peuvent être déplaçables entre une position d'utilisation et une position escamotée. L'habitacle 2 est également délimité, à sa partie arrière par une lunette arrière 9.

Le coffre 3 est délimité par une cloison 10 de séparation entre l'habitacle 2 et le coffre 3, un ensemble 11 formé par un couvercle 12 et une paroi d'extrémité arrière 13 ainsi que par les deux parois latérales qui se prolongent jusqu'à ladite paroi d'extrémité arrière 13.

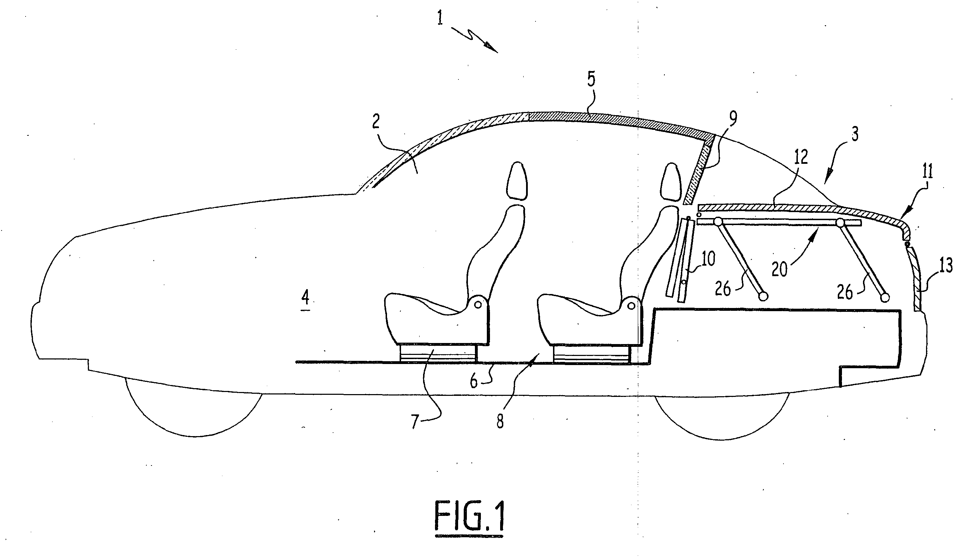

La cloison 10 de séparation peut être constituée d'au moins deux éléments articulés entre eux, comme représentés sur les Figs. 1 à 6 ou d'au moins deux éléments déployables par coulissement les uns par rapport aux autres.

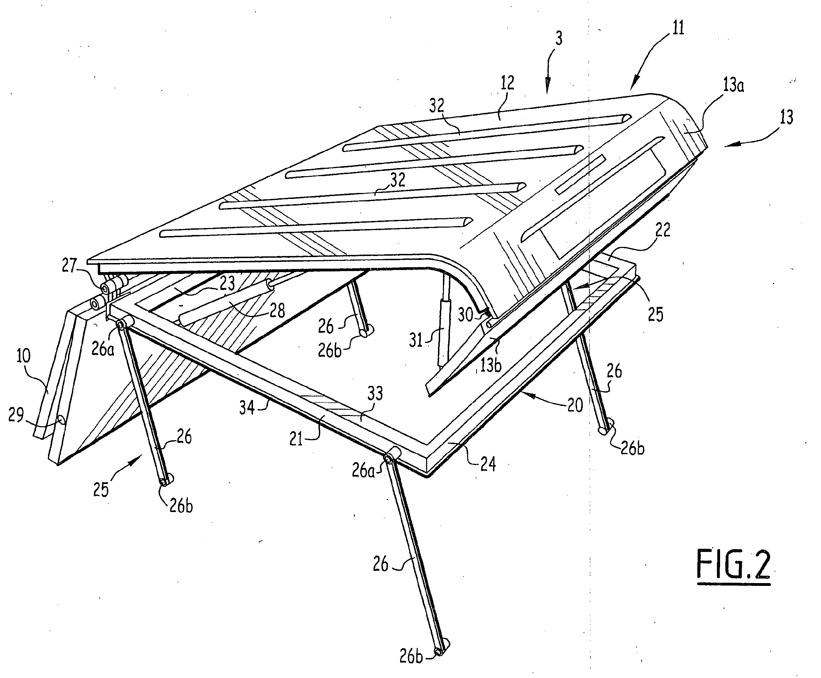

Comme représenté à la Fig. 2, l'ensemble 11 formé par le couvercle 12 et la paroi d'extrémité arrière 13 est supporté par un cadre 20 qui comporte deux montants longitudinaux, respectivement 21 et 22, s'étendant parallèlement l'un par rapport à l'autre et par deux montants transversaux, respectivement 23 et 24, s'étendant parallèlement l'un par rapport à l'autre.

Comme on le verra ultérieurement, le cadre 20 est déplaçable, au moyen d'un système d'articulations désigné par la référence générale 25, vers l'arrière du véhicule automobile 1 entre une position haute dans laquelle le couvercle 12 et la paroi d'extrémité arrière 13 ferment le coffre 3 et une position basse dans laquelle ledit couvercle 12 est appliqué contre le plancher 6 pour transformer ce véhicule 1 en véhicule à benne ouverte vers le haut.

Le système d'articulations 25 est formé par deux paires de biellettes parallèles et symétriques l'une par rapport à l'autre.

En se reportant à la Fig. 2, on va décrire une paire de biellettes disposées entre le montant longitudinal 21 et le plancher 6, l'autre paire de biellettes disposées entre le montant longitudinal 22 et le plancher 6 étant identiques.

Chaque paire de biellettes comporte deux biellettes 26 parallèles l'une par rapport à l'autre et chaque biellette 26 comporte une première extrémité 26a montée articulée sur le montant longitudinal 21 correspondant et une seconde extrémité 26b montée articulée sur le plancher 6.

Ainsi, chaque paire de biellettes 26 forme avec le montant longitudinal 21 ou 22 correspondant et le plancher 6 un parallélogramme articulé permettant au cadre 20 supportant l'ensemble 11 formé par le couvercle 12 et la paroi d'extrémité arrière 13 de se déplacer entre la position haute et la position basse s'étendant parallèlement par rapport à ladite position haute.

De plus, l'ensemble 11 formé par le couvercle 12 et la paroi d'extrémité arrière 13 est monté articulé sur le bord transversal avant 23 du cadre 20, par exemple au moyen d'au moins une charnière 27. De ce fait, cet ensemble 11 est déplaçable entre une position de fermeture du coffre 3 et une position d'ouverture dudit coffre 3. Le mouvement d'ouverture de l'ensemble 11 est assisté par deux vérins 28. La cloison 10 de séparation est montée articulée sur le plancher 6 à l'aide d'au moins une charnière 29 si bien que cette cloison 9 est déplaçable par pivotement vers l'arrière du véhicule automobile, ainsi que cela sera décrit ultérieurement, entre une position sensiblement verticale de séparation de l'habitacle 2 et du coffre 3 et une position sensiblement horizontale appliquée contre ledit plancher 6 dans la configuration à benne ouverte vers le haut du véhicule automobile 1.

La paroi d'extrémité arrière 13 est formée par un premier bandeau 13a solidaire du couvercle 12 et par un second bandeau 13b monté articulé au moyen d'au moins une charnière 30 sur ce premier bandeau 13a.

Le second bandeau 13b est donc déplaçable entre une position active prolongeant le premier bandeau 13a dans la position haute du cadre 20 pour fermer le coffre 3 et une position escamotée contre le premier bandeau 13a dans la position basse dudit cadre 20 de façon à éviter que ce second bandeau 13b touche le sol.

Le déplacement du bandeau 13b entre les deux positions est commandé par exemple par des vérins 31 électriques. Enfin, la surface externe du couvercle 11 est pourvue de barres de protection longitudinales 32.

Les différents éléments pivotants, c'est à dire la cloison 10 de séparation, l'ensemble 11 et le cadre 20 sont équipés de moyens de verrouillage ou de maintien dans les différentes positions qu'ils peuvent occuper.

Un joint d'étanchéité 33 assure l'étanchéité entre le couvercle 11 et les montants du cadre 20 et un joint d'étanchéité 34 assure l'étanchéité entre les montants de cadre 20 et notamment les parois latérales 4 et la cloison 10 de séparation.

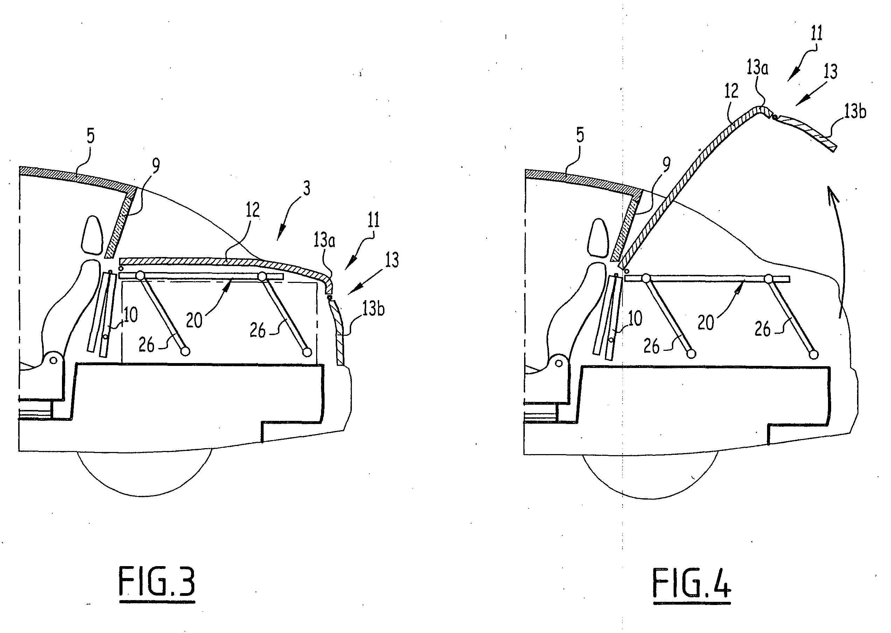

Dans la configuration initiale représentée sur les Figs. 1 et 3, la plaque 10 est en position sensiblement verticale et assure la séparation entre l'habitacle 2 et le coffre 3 tandis que le cadre 20 est en position haute et le coffre 3 est fermé par l'ensemble 11 constitué par le couvercle 12 et la paroi d'extrémité arrière 13.

Pour charger le coffre 3 du véhicule automobile 1, l'utilisateur actionne une poignée de commande du coffre et l'ensemble 11 s'ouvre en pivotant vers le haut autour des charnières 27, assisté par les deux vérins 28. Le cadre 20 reste immobile en position haute, ainsi que représenté à la Fig. 4. L'utilisateur pose son chargement dans le coffre 3 et referme le couvercle 12 et la paroi d'extrémité arrière 13.

Pour passer de cette configuration à la configuration de type à benne ouverte vers le haut pour permettre à l'utilisateur de charger un objet encombrant, il procède de la façon suivante.

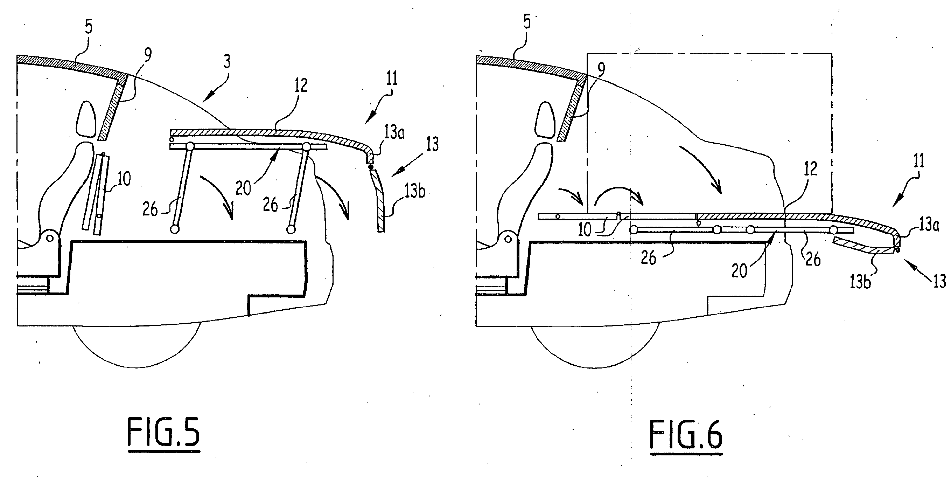

Tout d'abord, l'utilisateur actionne une poignée du cadre et tire ce cadre 20 supportant l'ensemble 11 constitué par le couvercle 12 et la paroi d'extrémité arrière 13, vers l'arrière du véhicule automobile. Le cadre pivote et descend par l'intermédiaire des paires de biellettes 26, comme représenté à la Fig. 5. La position des extrémités 26a et 26b des biellettes 26 permet de faire ressortir plus ou moins vers l'arrière du véhicule automobile, le couvercle 12, ainsi que montré à la Fig. 6. Dans cette position, le bandeau 13b de la paroi d'extrémité arrière 13 est rabattue contre le bandeau fixe 13a par l'intermédiaire des vérins 31 si nécessaire pour éviter qu'il frotte sur le sol.

De plus, la cloison 10 est rabattue vers l'arrière dans le prolongement du couvercle 12 afin de former une surface continue de chargement.

Cette configuration permet à l'utilisateur de transporter des objets très volumineux en hauteur et en longueur.

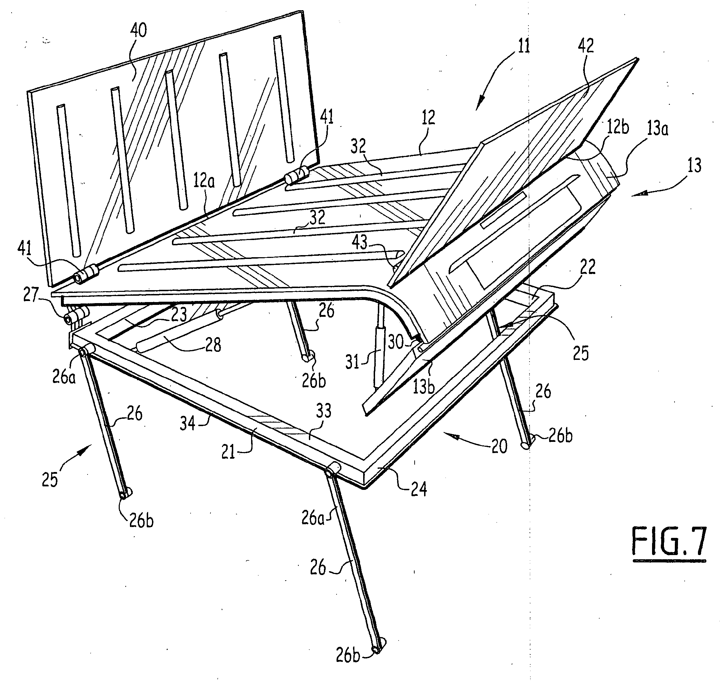

Sur les Figs. 7 à 9, on a représenté une variante, les éléments communs au précédent mode de réalisation ont été désignés par les mêmes références.

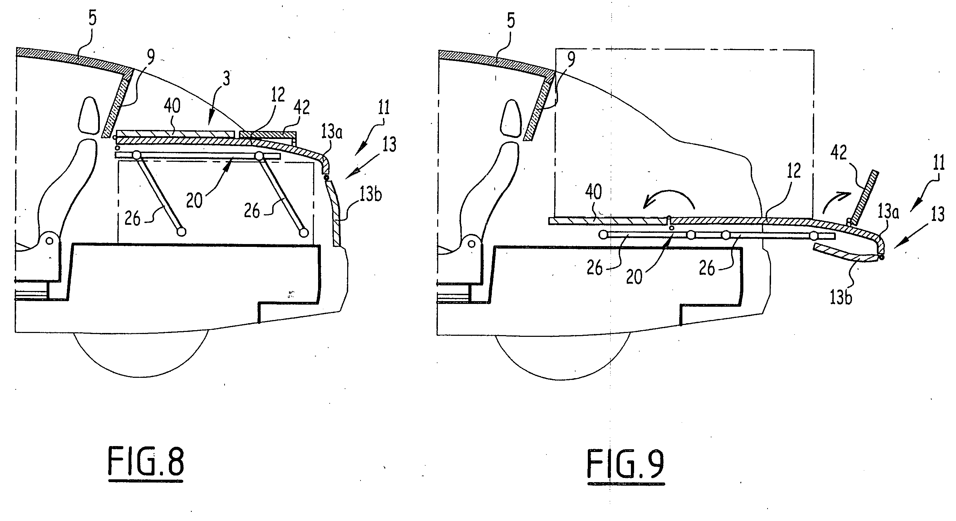

Dans cette variante, le couvercle 12 comporte sur son bord transversal avant 12a, un volet 40 pivotant autour d'au moins une charnière 41 entre une première position appliquée sur le couvercle 12 dans la position haute du cadre 20 (Fig. 8) et une seconde position en prolongement dudit couvercle (12) et appliquée contre le plancher 6 dans la position basse dudit cadre 20 (Fig. 9).

De plus, le couvercle 12 comporte, sur son bord transversal arrière 12b, un volet 42 pivotant autour d'au moins une charnière 43 entre une position horizontale appliquée sur le couvercle 12 (Fig. 8) et une position sensiblement verticale pour constituer un arrêt des charges posées sur ledit couvercle 12 (Fig. 9).

Dans la position haute du cadre 20, c'est à dire dans la position de fermeture du coffre 3 par le couvercle 12 et par la paroi d'extrémité arrière 13, les volets 40 et 42 sont rabattus sur le couvercle 12, comme représenté sur la Fig. 8.

Dans la position basse du cadre 20, correspondant à la configuration à benne ouverte vers le haut du véhicule automobile, le volet 40 est rabattu vers l'avant du véhicule automobile contre le plancher 6 pour constituer une surface de chargement continu avec le couvercle 12 et le volet 42 est placé en position sensiblement verticale de façon à former un arrêt pour les charges placées sur ledit couvercle 12, comme montré à la Fig. 9.

Le véhicule automobile selon l'invention permet de passer facilement d'une configuration de type berline ou de type coupé à une configuration de type à benne ouverte vers le haut au moyen de mécanismes simples à mettre en oeuvre et qui n'empiètent pas sur le volume de chargement disponible, tout en conservant une ouverture traditionnelle du coffre.

Le véhicule automobile selon l'invention peut donc servir aussi bien pour le transport de passagers ou de charges dans un habitacle entièrement fermé, que pour le transport de charges dans une benne ouverte vers le haut et facilement accessible par l'arrière.

## Revendications

1. Véhicule automobile transformable en véhicule automobile à benne ouverte vers le haut appelé pick-up, du type comportant, d'une part, un habitacle (2) délimité par deux parois latérales (4), un pavillon (5) et un plancher (6) et contenant au moins une rangée de sièges (7, 8) et, d'autre part, un coffre (3) délimité par une cloison (10) de séparation entre l'habitacle (2) et le coffre (3) et par au moins un ensemble (11) formé par un couvercle (12) et une paroi d'extrémité arrière (13) solidaire dudit couvercle (12), **caractérisé en ce que** l'ensemble (11) formé par le couvercle (12) et la paroi d'extrémité (13) est supporté par un cadre (20) déplaçable au moyen d'un système d'articulations (25) vers l'arrière du véhicule entre une position haute dans laquelle le couvercle (12) et la paroi d'extrémité (13) ferment le coffre (3) et une position basse dans laquelle ledit couvercle (12) est appliqué contre le plancher (6) pour transformer ce véhicule en véhicule à benne ouverte vers le haut.

2. Véhicule automobile selon la revendication 1, **caractérisé en ce que** le système d'articulations (25) est formé par deux paires de biellettes (26) parallèles et disposées chacune entre un montant longitudinal (21, 22) du cadre (20) et le plancher (6).

3. Véhicule automobile selon la revendication 2, **caractérisé en ce que** chaque biellette (26) comporte une première extrémité (26a) montée articulée sur le montant longitudinal (21, 22) correspondant et une seconde extrémité (26b) montée articulée sur le plancher (6).

4. Véhicule automobile selon l'une quelconque des revendications 1 à 3, **caractérisé en ce que** l'ensemble (11) formé par le couvercle (12) et la paroi d'extrémité (13) est monté articulé sur le cadre (20) et déplaçable, dans la position haute dudit cadre (20), entre une position de fermeture du coffre (3) et une position d'ouverture dudit coffre (3).

5. Véhicule automobile selon l'une quelconque des revendications 1 à 4, **caractérisé en ce que** la cloison (10) de séparation est montée articulée sur le plancher (6) et est basculable vers l'arrière du véhicule entre une position sensiblement verticale de séparation de l'habitacle (2) et du coffre (3) et une position sensiblement horizontale appliquée contre ledit plancher (6) dans la configuration à benne ouverte vers le haut.

6. Véhicule automobile selon l'une quelconque des revendications 1 à 5, **caractérisé en ce que** le couvercle (12) comporte, sur son bord transversal avant (12a), un volet (40) pivotant entre une première position appliquée sur le couvercle (12) dans la position haute du cadre (20) et une seconde position en prolongement dudit couvercle (12) et appliquée contre le plancher (6) dans la position basse dudit cadre (20).

7. Véhicule automobile selon l'une quelconque des revendications 1 à 6, **caractérisé en ce que** le couvercle (12) comporte, sur son bord transversal arrière (12b), un volet (42) pivotant entre une position horizontale appliquée sur le couvercle (12) et une position sensiblement verticale.

8. Véhicule automobile selon l'une quelconque des revendications 1 à 7, **caractérisé en ce que** la paroi d'extrémité (13) est formée par un premier bandeau (13a) solidaire du couvercle (12) et par un second bandeau (13b) monté articulé sur ce premier bandeau (13a) et déplaçable entre une position active prolongeant ledit premier bandeau (13a) dans la position haute du cadre (20) et une position escamotée contre le premier bandeau (13a) dans la position basse dudit cadre (20).
